# EUROPÄISCHE PATENTANMELDUNG

(11) **EP 1 022 179 A2**
(43) Veröffentlichungstag der Anmeldung: **26.07.2000**
(21) Anmeldenummer: 00100301.1
(22) Anmeldetag: 07.01.2000
(51) Int. Cl.: B60K 37/02

(54) **Vorrichtung zur optischen Darstellung eines Betriebsmodus, eine Funktion oder einen Betriebsparameter einer Fahrzeugkomponente repräsentierendes Symbol**

(30) Priorität: 19.01.1999 DE 29900849 U
(71) Anmelder: Hella KG Hueck & Co., 59552 Lippstadt (DE)
(72) Erfinder: Heuer, Theodor, 49626 Bippen (DE); Neinert, Joerg, 59755 Arnsberg (DE); Schmitz, Holger, 59329 Wadersloh (DE)

(57) **Zusammenfassung**

Beschrieben wird eine Vorrichtung zur optischen Darstellung eines einen Betriebsmodus, eine Funktion oder einen Betriebsparameter einer Fahrzeugkomponente, insbesondere einer Fahrzeug-Klimaanlage repräsentierendes Symbol. Insbesondere betrifft die Erfindung eine neue Form einer bei Tageslicht kontrastreichen optischen Darstellung eines Symbols, insbesondere an einem Steuergerät für eine Fahrzeugkomponente.

Das Symbol besteht aus einem lichtdurchlässigen Material (26), das dunkler (farbig oder grau) eingefärbt ist als das Material (24) in der unmittelbaren Umgebung des Symbols innerhalb des Symbolfeldes. Das Symbolfeld selbst, also der Bereich unmittelbar um das Symbol herum, ist nun nicht mehr, wie im Stand der Technik, dunkel, insbesondere schwarz, eingefärbt, sondern ist heller als das dunkle Symbol. Damit ist es möglich, daß bei Tageslicht ein Symbol vor einem hellen Hintergrund bzw. vor einem spiegelnden Hintergrund mit dem bloßen Auge erkennbar ist.

## Beschreibung

Die Erfindung betrifft eine Vorrichtung zur optischen Darstellung eines einen Betriebsmodus, eine Funktion oder einen Betriebsparameter einer Fahrzeugkomponente, insbesondere einer Fahrzeug-Klimaanlage repräsentierendes Symbol. Insbesondere betrifft die Erfindung eine neue Form einer bei Tageslicht kontrastreichen optischen Darstellung eines Symbols, insbesondere an einem Steuergerät für eine Fahrzeugkomponente.

Unterschiedliche Betriebsmodi sowie Funktionen und Betriebsparameter einer Fahrzeugkomponente werden im Fahrzeug durch Symbole angezeigt. Diese Symbole befinden sich beispielsweise an der Frontblende von Steuergeräten für die einzelnen Fahrzeugkomponenten, im Falle einer Fahrzeug-Klimaanlage an dem Steuergerät, an dem der Bediener die Betriebsparameter und Betriebsfunktionen einstellt. Oftmals befinden sich diese Symbole auch an den (Druck- oder Dreh-)Bedienelementen für Schalter, mit denen die Betriebsmodi bzw. -funktionen und -parameter eingestellt werden können.

Um die Symbole bei Tageslicht mit ausreichendem Kontrast darstellen zu können, ist es allgemein üblich, die Symbole selbst weiß und die Umgebung um die Symbole herum schwarz einzufärben. Das Material, aus dem das Symbol besteht, ist darüber hinaus lichtdurchlässig, um hinterleuchtet werden zu können. Diese Suchbeleuchtung ist erforderlich, um die Symbole auch bei Dunkelheit erkennen zu können.

Aus ästhetischen Gründen wäre es oftmals wünschenswert, den Bereich um die einzelnen Symbole herum anders als schwarz einzufärben. Hier könnte man beispielsweise an Einfärbungen der Frontblende von Fahrzeugkomponenten-Steuergeräten in einer auf die Innenausstattung abgestimmten Farbe oder in der Farbe des Armaturenbretts des Fahrzeuges denken. Ferner ist es mitunter wünschenswert, verchromte oder chromfarbene bzw. verspiegelte Elemente in der Frontblende des Steuergeräts zu integrieren, wobei auch in diesen Bereichen der Frontblende Symboldarstellungen wünschenswert sind.

Der Erfindung liegt die Aufgabe zugrunde, eine Vorrichtung zur optischen Darstellung eines einen Betriebsmodus, eine Funktion oder einen Betriebsparameter einer Fahrzeugkomponente, insbesondere einer Fahrzeug-Klimaanlage repräsentierendes Symbol zu schaffen, die hinterleuchtbar und dennoch bei Tageslicht kontrastreich ist, ohne daß der Bereich um das Symbol herum dunkel bzw. schwarz ist.

Zur Lösung dieser Aufgabe wird mit der Erfindung eine Vorrichtung zur optischen Darstellung eines Symbols vorgeschlagen, die versehen ist mit
- einer Vorderwand,
- mindestens einem Symbolfeld auf der Vorderwand, innerhalb dessen mindestens eine Symboldarstellung angeordnet ist und
- einer hinter der Vorderwand angeordneten Lichtquelle zum Hinterleuchten der Symboldarstellung mit Licht, dessen Spektrum zumindest auch im sichtbaren Bereich liegt, wobei
- die Symboldarstellung aus einem für das Licht der Lichtquelle durchlässigen Material besteht, das bei Belichtung durch Umgebungslicht einen für die Sichtbarmachung der Symboldarstellung erforderlichen
   Kontrast zum Material des die Symboldarstellung umgebenden Bereichs des Symbolfeldes aufweist.

Bei dieser Vorrichtung ist erfindungsgemäß vorgesehen, daß das Material der Symboldarstellung dunkler ist als das Material des die Symboldarstellung umgebenden Bereichs des Symbolfeldes.

Die der Erfindung zugrundeliegende Aufgabe wird also sinngemäß dadurch gelöst, daß das Symbol aus einem lichtdurchlässigen Material besteht, das dunkler (farbig oder grau) eingefärbt ist als das Material in der unmittelbaren Umgebung des Symbols innerhalb des Symbolfeldes. Das Symbolfeld selbst, also der Bereich unmittelbar um das Symbol herum, ist nun nicht mehr, wie im Stand der Technik, dunkel, insbesondere schwarz, eingefärbt, sondern ist heller als das dunkle Symbol. Damit ist es möglich, daß bei Tageslicht ein Symbol vor einem hellen Hintergrund bzw. vor einem spiegelnden Hintergrund mit dem bloßen Auge erkennbar ist.

Durch diesen neuen Design-Ansatz eröffnen sich neue ästhetische Möglichkeiten, was das Aussehen der Frontblenden von Fahrzeugkomponenten-Steuergeräten bzw. Fahrzeugkomponenten-Bedientasten betrifft. So ist es nun beispielsweise möglich, ein hinterleuchtetes Symbol auch in einem spiegelnden, verchromten, silberfarbenen o. dgl. Bereich anzuordnen. Das bei Tageslicht dunkler wirkende Symbol hebt sich gegenüber diesem Hintergrund kontrastreich und deutlich genug ab, um eindeutig mit dem bloßen Auge erkannt zu werden. Selbiges gilt auch dann, wenn der Bereich um das Symbol herum heller, also in einer anderen Farbe als die bisher zumeist schwarzen Frontblenden lackiert ist. Damit ergeben sich neue designerische Möglichkeiten der Ästhetik im Armaturenbrettbereich des Fahrzeuges, bei dem man in den vergangenen Jahren bereits dazu übergegangen war, andere Farben als schwarz und insbesondere solche Farben zu wählen, die zur Farbgebung der Innenausstattung (insbesondere Polsterung, Türverkleidungen etc.) abgestimmt sind.

Bei der erfindungsgemäßen Vorrichtung ist also das Material des Symbols so stark eingefärbt, daß bei Auftreffen des Umgebungslichts von vorne ein starker Kontrast zur Symbolumgebung gegeben ist. Das Umgebungslicht wird also vom Symbol absorbiert, wozu auch beiträgt, daß der Bereich hinter der Vorrichtung gegen das Eindringen von Streulicht abgedichtet ist. Andererseits ist die Abdunklung des Materials des Symbols derart schwach, daß das Licht der Lichtquelle im wesentlichen unter Beibehaltung zumindest des im sichtbaren Bereich liegenden Teils seines Spektrums noch durch das Symbol hindurchscheint (farbiges Licht wird also unter Beibehaltung seiner Farbe hindurchgelassen).

Vorzugsweise handelt es sich bei dem Material des Symbols um ein transparentes Material, das entsprechend eingefärbt ist, wobei die Einfärbung derart stark gewählt ist, daß sich Transmissionsverluste zwischen mindestens 10 % und höchstens 80 % ergeben. Vorzugsweise wird das Material des Symbols mit schwarzen Pigmenten eingefärbt, so daß sich insgesamt ein schwach schwarzer optischer Eindruck ergibt. Eine derartige Einfärbung wird auch als "Graueinfärbung" bezeichnet. Solche Graueinfärbungen sind u. a. von Kfz-Rückleuchten her bekannt. Diese Rückleuchten erscheinen dem Betrachter bei Tageslicht grau bis schwarz, lassen aber beispielsweise das rote Rück- bzw. Bremslicht und das gelbe Blinkerlicht ohne Beeinträchtigung der Farbe hindurch.

Als Material für das Symbol eignet sich insbesondere der unter der Bezeichnung "Lexan" bekannte Transparent-Kunststoff, der vorzugsweise grau eingefärbt ist. Insbesondere wird die Graueinfärbung derart gewählt, daß sich Transmissionsverluste zwischen 20 % und 60 % und vorzugsweise zwischen 30 % bis 50 % ergeben.

In vorteilhafter Weiterbildung der Erfindung ist ferner vorgesehen, daß sich zwischen der Lichtquelle und dem Symbol ein Lichtleiter befindet, der ein der Lichtquelle zugewandtes Lichteintrittsende und ein das Symbol aufweisendes oder diesem zugewandtes Lichtaustrittsende aufweist. Dieser Lichtleiter braucht lediglich an seinem Lichtaustrittsende dunkler zu sein als die Umgebung um das Symbol herum. Im übrigen Bereich kann der Lichtleiter insbesondere transparent sein, so daß Transmissionsverluste lediglich am Lichtaustrittsende entstehen und im übrigen so viel Licht wie möglich durch den Lichtleiter zur Hinterleuchtung des Symbols transportiert wird. Es reicht also aus, wenn lediglich die auch mit "Abschlußlinse" bezeichnete Lichtaustrittsseite des Lichtleiters eingefärbt ist. Denn diese Abschlußlinse ist es, die je nach Ausgestaltung des Symbols mit bloßem Auge sichtbar ist und die daher den Kontrast zur helleren Symbolumgebung liefern soll.

Die Erfindung wird nachfolgend anhand zweier Ausführungsbeispiele unter Bezugnahme auf die Zeichnung näher erläutert. Im einzelnen zeigen:
- Fig. 1: eine perspektivische Darstellung der Vorderseite eines Steuergeräts für eine Kfz-Klimaanlage,
- Fig. 2: den Aufbau einer ein Symbol tragenden Bedientaste des Steuergeräts im Querschnitt,
- Fign. 3 und 4: Teilbereichsdarstellungen der Frontblende zur Verdeutlichung der Lichtverhältnisse bei Tageslicht und bei eingeschalteter Suchbeleuchtung bei dunkler Umgebung,
- Fig. 5: eine Ansicht ähnlich der nach Fig. 1 einer Frontblende gemäß einem zweiten Ausführungsbeispiel und
- Fig. 6: eine perspektivische Explosionsdarstellung des Aufbaus eines Bedienelements mit Symbol der Frontblende gemäß Fig. 5.

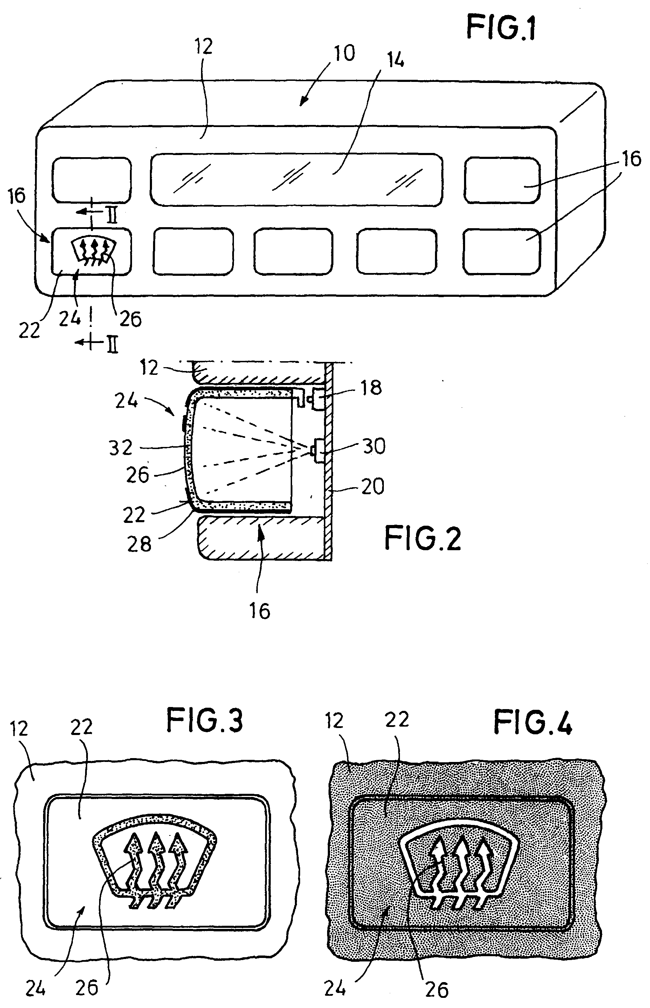

In Fig. 1 ist perspektivisch und stark schematisch die Frontblende eines Steuergeräts 10 einer Kfz-Klimaanlage dargestellt. An der Frontblende 12 befinden sich neben einer LCD-Anzeige 14 eine Vielzahl von Bedienelementen 16 in Form von bewegbar an der Frontblende 12 geführten Drucktasten, die mit Druckschaltern 18 zusammenwirken, welche auf einer als Leiterplatine 20 ausgebildeten Trägerplatte angeordnet sind, die sich wiederum hinter der Frontblende befindet (s. hierzu auch Fig. 2). Jede Bedientaste 16 weist eine Vorderwand 22 auf, die mit mindestens einem Symbolfeld 24 versehen ist. Innerhalb des Symbolfeldes 24 befindet sich eine Symboldarstellung 26. Bei diesen Symboldarstellungen handelt es sich beispielsweise um Zeichen bzw. Piktogramme für den Defrost-Betrieb, Temperaturerhöhung oder -verringerung, Umluft-Betrieb, die Luftverteilung usw. Die Besonderheit der Bedientasten 16 wird nachfolgend anhand der Bedientaste für die Zuschaltung bzw. Abschaltung des Defrost-Betriebes der Windschutzscheibe näher erläutert.

Bei der Bedientaste 16 handelt es sich um ein Kunststoff-Spritzgußteil aus einem lichtdurchlässigen Kunststoff. Dieser Kunststoff bildet auch die Vorderwand 22 der Bedientaste 16. Durch Aufbringen einer Lackschicht 28 auf der gesamten Außenseite der Bedientaste 16 und anschließendes mittels Laser erfolgendes Freilegen von Bereichen innerhalb des Symbolfeldes 24 der Vorderseite 22 der Bedientaste 16 ergibt sich die Symboldarstellung 26. Dabei kann die Konturenschärfe der Symboldarstellung 26 dadurch erhöht werden, daß vor der Lackierung 28 eine dem Material der Bedientaste 16 angepaßte Grundierung aufgebracht wird. Diese Symboldarstellung 26 wird mittels einer Lichtquelle 30 in Form einer LED von hinten ausgeleuchtet (s. Fig. 2).

Die Besonderheit der Bedientaste 16 besteht darin, daß ihre Vorderseite 22 mit einem hellen Lack 28 versehen ist, während das Material des Kunststoffs der Bedientaste 16 zumindest an der Vorderwand 22 grau eingefärbt ist. Diese graue Einfärbung ist in Fig. 2 bei 32 angedeutet. Die gesamte Bedientaste 16 besteht aus einem transparenten Kunststoff, wie beispielsweise "Lexan", der grau eingefärbt ist, so daß sich Transmissionsverluste von 20 % bis 50 %, insbesondere von ca. 30 % ergeben. Eine derartige Graueinfärbung ist ausreichend, um bei Tageslicht die Symboldarstellung 26 gegenüber der ansonsten hellen Vorderwand 22 der Bedientaste 16 dunkel erscheinen zu lassen (s. Fig. 3). Andererseits ist die Graueinfärbung schwach genug, um das Hinterleuchtungslicht der Lichtquelle 30 ohne Beeinträchtigung seiner Farbe innerhalb der die Symboldarstellung bildenden freigelegten Bereiche des Symbolfeldes 24 hindurchleuchten zu lassen, so daß sich damit eine intakte Suchbeleuchtung bei Dunkelheit ergibt, wie es in Fig. 4 angedeutet ist.

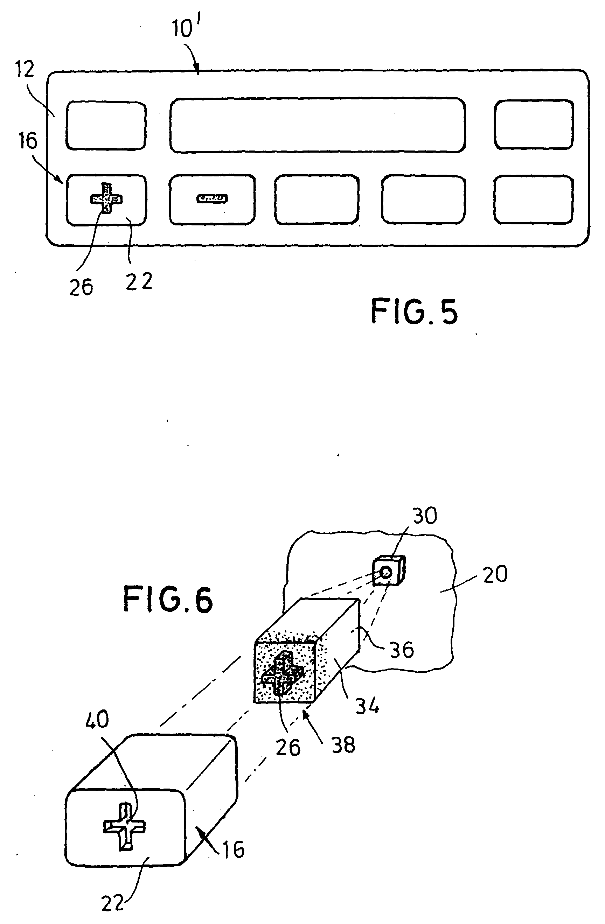

Ein weiteres Ausführungsbeispiel eines Klimasteuergeräts 10' mit grau eingefärbter Symboldarstellung auf der Frontblende ist in Fign. 5 und 6 dargestellt. Soweit die Teile dieses Ausführungsbeispiels denjenigen der Fign. 1 bis 4 entsprechen bzw. gleich sind, sind sie mit den gleichen Bezugszeichen versehen.

Im Unterschied zur Frontblende 12 des Steuergeräts 10 der Fign. 1 bis 4 sind die Symboldarstellungen 26 zumindest einiger der Bedientasten 16 der Frontblende 12 des Steuergeräts 10' durch entsprechend geformte Enden von Lichtleitern 34 realisiert. Diese Lichtleiter 34 befinden sich zwischen der Vorderwand 22 einer Bedientaste 16 und der dieser Bedientaste 16 zugeordneten Hinterleuchtungs-Lichtquelle 30. Ein derartiger Lichtleiter ist in Fig. 6 gezeigt und weist ein der Lichtquelle 30 zugewandtes Lichteintrittsende 36 und ein der Vorderseite der Frontblende 12 zugewandtes Lichtaustrittsende 38 auf. In dem hier dargestellten Fall soll ein "+" als zu hinterleuchtendes Symbol dargestellt werden. Diese Symboldarstellung 26 ist durch Ausgestaltung des Lichtaustrittsendes 38 des Lichtleiters 34 so, wie in Fig. 6 gezeigt, ausgebildet. Das wie ein "+"-Zeichen ausgebildete vordere Ende ist in eine korrespondierende Öffnung 40 in der Vorderwand 22 der Bedientaste 16 eingesetzt. In diesem Bereich ist der Lichtleiter 34 grau eingefärbt, wobei sich Transmissionsverluste vorzugsweise zwischen 20 % und 50 % einstellen.

Auch bei diesem Design der Bedientaste 16 ergeben sich die gleichen optischen Effekte wie im Zusammenhang mit dem Ausführungsbeispiel gemäß den Fign. 1 bis 4 erläutert. Die Bedientaste 16 weist wiederum eine helle Vorderwand 22 auf, die insbesondere auch verspiegelt sein kann. Je nach Applikation und Designwünschen ist es auch möglich, die gesamte Bedientaste 16 zu verspiegeln bzw. hochglanz zu polieren. Dies kann entweder durch eine entsprechende Beschichtung oder aber durch Verwendung eines entsprechenden Materials geschehen aus dem die Bedientaste gefertigt ist.

### BEZUGSZEICHENLISTE

- 10: Steuergerät
- 10': Steuergerät
- 12: Frontblende
- 14: LCD-Display
- 16: Bedientaste
- 18: Druckschalter
- 20: Leiterplatte
- 22: Vorderwand
- 24: Symbolfeld
- 26: Symboldarstellung
- 28: Lackierung
- 30: Lichtquelle
- 32: Graueinfärbung
- 34: Lichtleiter
- 36: Lichteintrittsende
- 38: Lichtaustrittsende
- 40: Aussparung

## Patentansprüche

1. Vorrichtung zur optischen Darstellung eines einen Betriebsmodus, eine Funktion oder einen Betriebsparameter einer Fahrzeugkomponente, insbesondere einer Fahrzeug-Klimaanlage repräsentierendes Symbol, mit
- einer Vorderwand (22),
- mindestens einem Symbolfeld (24) auf der Vorderwand (22), innerhalb dessen mindestens eine Symboldarstellung (26) angeordnet ist und
- einer hinter der Vorderwand (22) angeordneten Lichtquelle (30) zum Hinterleuchten der Symboldarstellung (26) mit Licht, dessen Spektrum zumindest auch im sichtbaren Bereich liegt, wobei
- die Symboldarstellung (26) aus einem für das Licht der Lichtquelle (30) durchlässigen Material besteht, das bei Belichtung durch Umgebungslicht einen für die Sichtbarmachung der Symboldarstellung (26) erforderlichen Kontrast zum Material des die Symboldarstellung (26) umgebenden Bereichs des Symbolfeldes (24) aufweist,
**dadurch gekennzeichnet,**
- daß das Material der Symboldarstellung (26) dunkler ist als das Material des die Symboldarstellung (26) umgebenden Bereichs des Symbolfeldes (24) und das Licht der Lichtquelle (30) im wesentlichen unter Beibehaltung zumindest des im sichtbaren Bereich liegenden Teils seines Spektrums hindurchläßt.

2. Vorrichtung nach Anspruch 1, dadurch gekennzeichnet, daß das Material der Symboldarstellung (26) transparent und eingefärbt ist.

3. Vorrichtung nach Anspruch 1 oder 2, dadurch gekennzeichnet, daß das Material der Symboldarstellung (26) grau eingefärbt ist.

4. Vorrichtung nach einem der Ansprüche 1 bis 3, dadurch gekennzeichnet, daß das Material der Symboldarstellung (26) einen Transmissionsverlust von 10 % bis 80 %, insbesondere 20 % bis 60 % und vorzugsweise 30 % bis 50 % aufweist.

5. Vorrichtung nach einem der Ansprüche 1 bis 4, dadurch gekennzeichnet, daß ein Lichtleiter (34) vorgesehen ist, der ein Lichteintrittsende (36) und ein Lichtaustrittsende (38) aufweist, daß das Lichtaustrittsende (38) des Lichtleiters (34) als die Symboldarstellung (26) ausgebildet ist und daß der Lichtleiter (34) zumindest an seiner Lichtaustrittsseite dunkler ist als das Material des die Symboldarstellung (26) umgebenden Bereichs des Symbolfeldes (24).
